# EUROPÄISCHE PATENTANMELDUNG

(11) **EP 1 746 499 A1**
(43) Veröffentlichungstag der Anmeldung: **24.01.2007**
(21) Anmeldenummer: 05014579.6
(22) Anmeldetag: 05.07.2005
(51) Int. Cl.: G06F 9/44

(54) **System und Verfahren zur Entwicklung einer Software oder einer Softwarekomponente sowie Verfahren zum Betrieb einer solchen Software**

(71) Anmelder: SIEMENS AKTIENGESELLSCHAFT, 80333 München (DE)
(72) Erfinder: Karl-Dietze, Ludwig, 90562 Heroldsberg (DE); Rother, Klaus, 41366 Schwalmtal (DE)

(57) **Zusammenfassung**

Um auf einfache Art und Weise funktionale Erweiterungen von Geschäftsobjekten zu ermöglichen, wird vorgeschlagen, dass während des Erzeugens oder im Anschluss an das Erzeugen eines Geschäftobjekts (1) unter Verwendung von Metawissen (6) ein Zuordnen einer oder mehrerer Funktionseinheiten (2) zu dem Geschäftsobjekt (1) erfolgt. Eine Zuordnung einer Funktionseinheit (2) zu einem Geschäftsobjekt (1) kann daher auch während der Laufzeit der Software erfolgen. Es wird somit eine Designvorlage für eine Softwarearchitektur geschaffen, die es ermöglicht, Software-Probleme auf besonders einfache und elegante Art und Weise zu lösen.

## Beschreibung

System und Verfahren zur Entwicklung einer Software oder einer Softwarekomponente sowie Verfahren zum Betrieb einer solchen Software

Die vorliegende Erfindung betrifft ein System zur Entwicklung einer Software oder einer Softwarekomponente, ein Verfahren zur Entwicklung einer Softwarekomponente sowie ein Verfahren zum Betrieb einer Software, die nach einem solchen Verfahren entwickelt wurde oder die eine nach einem solchen Verfahren entwickelte Softwarekomponente aufweist.

Bei der Entwicklung von Software ist es bekannt, "Objekte" zu definieren, die als selbständige Einheiten sowohl Daten als auch Anweisungen zur Handhabung der Daten aufweisen. Derartige Objekte, die mit Hilfe von sogenannten objektorientierten Programmiersprachen erzeugt werden, können als sogenannte "Geschäftsobjekte" (business objects) einen Teil eines realen Geschäftskonzeptes abbilden. Zur Abbildung eines Ausschnittes aus einem Automatisierungsprojekt können so beispielsweise die Geschäftsobjekte "Einbaugehäuse" oder "Energieversorgungsmodul" erzeugt werden. Ein Geschäftsobjekt ist mit anderen Worten ein Objekt, das für die Gesamtapplikation Dienste erledigt. Geschäftsobjekte umfassen dabei stets einen Teil der Geschäftslogik. Neben Geschäftsobjekten sind unter anderem auch Datenobjekte und Oberflächenobjekte bekannt, die entsprechend zur Verwaltung von Daten und Datenverknüpfungen beziehungsweise Bedienoberflächen und dergleichen dienen.

Ein Vorteil dieser objektorientierten Programmierung ist es, dass neue Objekte erzeugt werden können, die Eigenschaften von bereits vorhandenen Objekten erben. Mit anderen Worten kann eine Spezialisierung eines Geschäftsobjektes durch dieses Vererbungs-Konzept erreicht werden. Dies führt dazu, dass funktionale Erweiterungen, die nach der Auslieferung einer Softwareversion durchgeführt werden nur möglich sind bei Geschäftsobjekten, die mit einer Nachfolgerversion ausgeliefert werden, oder - wenn Basisklassen der Geschäftsobjekte betroffen sind - eine neue Version aller von dieser Basisklasse abgeleiteten Geschäftsobjekte erforderlich ist.

Diese Einschränkung erschwert die Nachlieferung von einzelnen Geschäftsobjekten, da aufgrund von Abhängigkeiten häufig solche Geschäftsobjekte betroffen sind, die bereits ausgeliefert sind. Handelt es sich bei dem Softwareprodukt um ein offenes System, bei dem Geschäftsobjekte von Fremdherstellern eingebunden werden können, führen Erweiterungen bereits bestehender Geschäftsobjekte häufig dazu, dass die Fremdhersteller ebenfalls eine neue Version der von Ihnen erstellten Geschäftsobjekte erzeugen und zur Verfügung stellen müssen. Die hierdurch entstehenden Kosten führen zu einer Verteuerung des Softwareproduktes sowie zu einem Mehraufwand in der Softwareentwicklung und dem Systemtest.

Eine Aufgabe der vorliegenden Erfindung ist es, auf einfache Art und Weise funktionale Erweiterungen von Geschäftsobjekten zu ermöglichen. Diese Aufgabe wird durch ein Verfahren nach Anspruch 1, ein System nach Anspruch 4 sowie ein Verfahren nach Anspruch 5 gelöst.

Bei der Entwicklung einer Software oder einer Softwarekomponente ist es danach erfindungsgemäß vorgesehen, dass während des Erzeugens eines Geschäftsobjektes oder im Anschluss an das Erzeugen ein Zuordnen einer oder mehrerer Funktionseinheiten zu dem Geschäftsobjekt unter Verwendung von Metawissen erfolgt.

Mit der vorliegenden Erfindung wird eine Designvorlage für eine Softwarearchitektur geschaffen, die es ermöglicht, Software-Probleme auf besonders einfache und elegante Art und Weise zu lösen.

Da die gewünschten Geschäftsfunktionalitäten nicht in dem Geschäftsobjekt selbst, sondern in unabhängig von dem Geschäftsobjekt vorhandenen Funktionseinheiten, so genannten "Features", enthalten sind, können einem Geschäftsobjekt derartige Funktionalitäten beliebig zugeordnet werden. Anstelle einer Ableitung oder Vererbung - wie aus dem Stand der Technik bekannt - erfolgt somit eine Aggregation von Funktionseinheiten. Geschäftsobjekte können somit durch Hinzufügen von Funktionseinheiten erweitert werden, ohne dass Basisklassen oder andere, bereits ausgelieferte Geschäftsobjekte modifiziert werden müssen.

Die Zuordnung der Funktionseinheiten zu den verschiedenen Geschäftsobjekten erfolgt dabei über Metawissen, welches vorzugsweise in Textform vorliegt, beispielsweise als XMLbasiertes Metawissen in einer oder mehrerer Beschreibungsdateien oder dynamisch zur Laufzeit.

Bei der Ausführung einer derart programmierten Software oder Softwarekomponente auf einem Rechner ist damit auf einfache Art und Weise eine Zuordnung einer Funktionseinheit zu einem Geschäftsobjekt während der Laufzeit der Software möglich. Hierzu ist es lediglich erforderlich, dass dem Geschäftsobjekt unter Verwendung eines entsprechend modifizierten Metawissens, auf das beispielsweise ein Fabrikobjekt zugreift, die entsprechende Funktionseinheit zugewiesen wird.

An jedes Geschäftsobjekt können, anders ausgedrückt, eine beliebige Anzahl von Funktionsbausteinen, wie nach Art von Bausteinen eines Legobaukastens, "angebaut" werden, wobei unterschiedliche Geschäftsobjekte durch unterschiedliche Kombinationen der gleichen Funktionsbausteine modelliert werden können.

Durch die Erfindung wird eine äußerst weitgehende Entkopplung der einzelnen Teile der Geschäftslogik erreicht. Bei einer Änderung in der Software muss daher nur ein sehr kleiner Teil der Software verändert, getestet und ausgeliefert werden.

Während bei aus den Stand der Technik bekannten Softwareprodukten nach dem Kompilieren ein lauffähiges Produkt entsteht, welches nicht mehr geändert werden kann, ist es mit Hilfe der Erfindung möglich, Geschäftsobjekte zu verwenden, die sogar während der Laufzeit der Software dynamisch mit Funktionseinheiten ergänzt und damit modifiziert werden können.

Mit anderen Worten ist es möglich, über ein neu hinzugefügtes Metawissen einem laufenden Geschäftsobjekt mitzuteilen, dass eine neue Funktionseinheit gestartet und damit hinzugefügt werden soll.

Somit ist sowohl eine Funktionserweiterung von bereits ausgelieferten Geschäftsobjekten, als auch von solchen Geschäftsobjekten möglich, die durch Fremdhersteller implementiert wurden. Anders ausgedrückt können mit Hilfe des Metawissens neue Funktionseinheiten auch an die Geschäftsobjekte von Fremdherstellern gebunden werden. Dies ist insbesondere auch aufgrund der Unabhängigkeit der Funktionseinheiten voneinander möglich, da bei der Aggregation einer neuen Funktionseinheit die von dem Fremdhersteller für eigene Geschäftsfunktionalitäten benötigten Funktionseinheiten nicht berücksichtigt werden müssen.

Vorteilhafte Ausführungsformen der Erfindung sind in den Unteransprüchen angegeben.

Gemäß einer bevorzugten Ausführungsform der Erfindung realisieren die Funktionseinheiten jeweils voneinander unabhängige Funktionen der Geschäftslogik. Durch eine derartige Unabhängigkeit der Funktionseinheiten voneinander können sie auch einzeln beziehungsweise getrennt voneinander durch neue Versionen ausgetauscht werden. Die Unabhängigkeit der Funktionseinheiten unterstützt die parallele Entwicklung der Software und reduziert den Systemtestaufwand dadurch, dass der Test auf geänderte Funktionseinheiten beschränkt werden kann. Sollten Funktionseinheiten derart ausgestaltet sein, dass sie miteinander interagieren, so können sie auch paarweise ausgetauscht beziehungsweise nachgeliefert werden, wenn sich die Schnittstellen oder Semantik dieser Funktionseinheiten verändert haben.

Unabhängigkeit der Funktionseinheiten voneinander bedeutet auch, dass eine Funktionseinheit vorzugsweise nur solche Geschäftslogikanteile umfasst, die nicht in Zuständigkeitsbereiche von anderen Funktionseinheiten fallen. Vorzugsweise wird die zu implementierende Geschäftslogik in derart kleine funktionale Einheiten unterteilt, dass die mit diesen funktionalen Einheiten "bestückten" Funktionseinheiten tatsächlich voneinander unabhängig sind. Um die Geschäftslogik als Ganzes wieder zusammenzuführen, werden die Funktionseinheiten in der entsprechenden Zusammenstellung dem Geschäftsobjekt zugeordnet.

Entsprechend den Vorgaben für die zu erstellende Software existiert ein Regelwerk darüber, wann zwischen welchen Geschäftsobjekten eine Beziehung aufgebaut werden soll. Da es sich bei den Geschäftsobjekten stets um den selben Objekttyp handelt, sich die Geschäftsobjekte mit anderen Worten nur anhand der aggregierten Funktionseinheiten voneinander unterscheiden, ist eine pauschale Regel, wonach stets dann eine Beziehung zwischen zwei Objekten hergestellt werden soll, wenn diese beiden Objekte aufeinander treffen, nicht sinnvoll. Gemäß einer weiteren bevorzugten Ausführungsform der Erfindung ist daher die Definition und/oder Verwaltung der Beziehungen zwischen Geschäftsobjekten den Funktionseinheiten zugewiesen. Ein derart aufgebautes Geschäftsobjektmodell ermöglicht eine dem neuartigen Aufbau des Geschäftsobjektes entsprechende flexible Beziehungsverwaltung.

Die Erfindung wird nachfolgend anhand eines Ausführungsbeispiels erläutert, das mit Hilfe der Figuren näher beschrieben wird. Hierbei zeigen:
- FIG 1: eine schematische Abbildung eines allgemeinen Objektmodells entsprechend der Erfindung,
- FIG 2: eine schematische Darstellung zweier miteinander verknüpfter Geschäftsobjekte anhand eines Instanzmodells,
- FIG 3: eine schematische Darstellung der Erzeugung zweier Geschäftsobjekte.

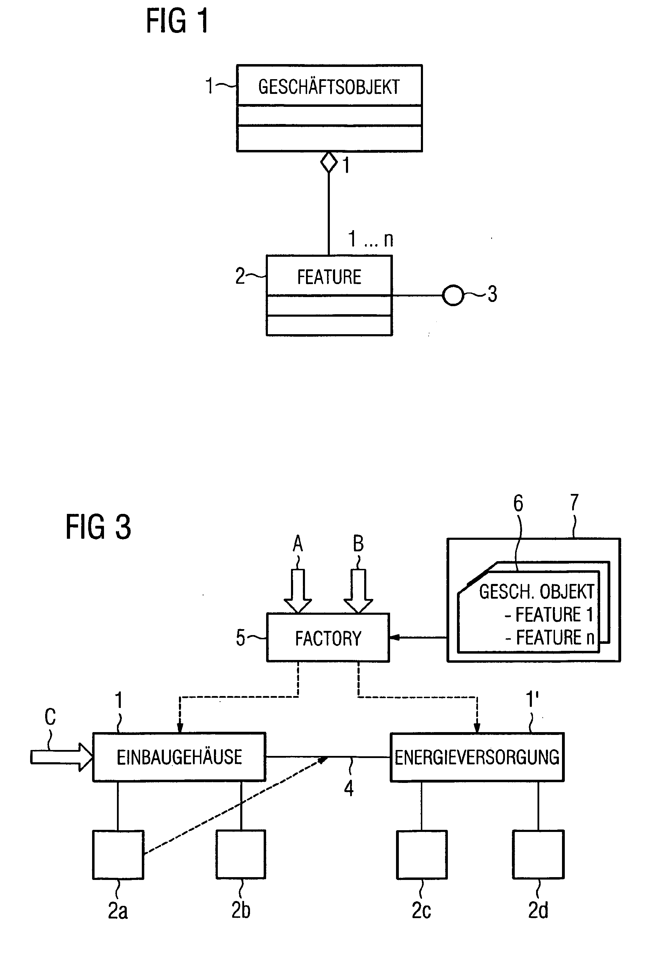

Wie in FIG 1 in Form einer schematischen Abbildung eines allgemeinen Objektmodells angegeben, ist einem Geschäftsobjekt 1 eine Anzahl (1 bis n) von Funktionseinheiten 2 zugeordnet. Die Funktionseinheit 2 realisiert eine Schnittstelle 3 mit ausgewählten Funktionen. Diese Schnittstellenfunktionen werden dem Nutzer des Geschäftsobjekts 1 durch die Funktionseinheit 2 angeboten.

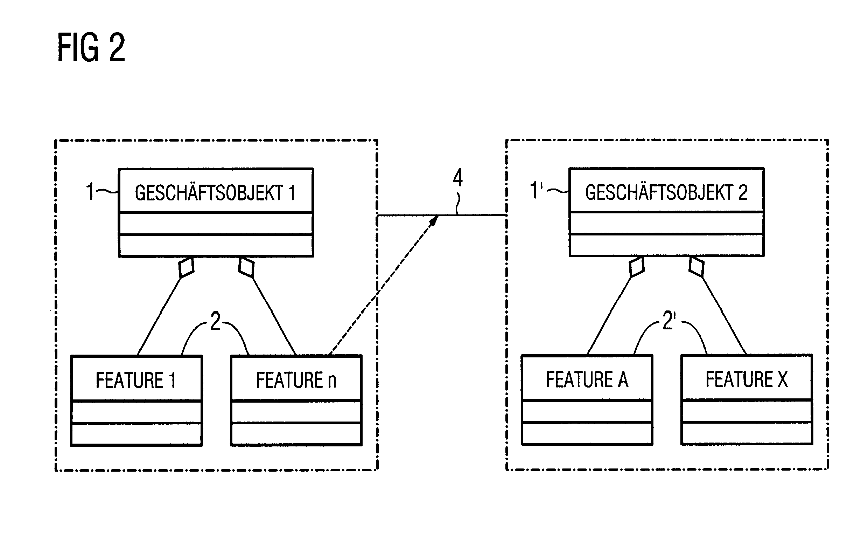

FIG 2 stellt beispielhaft eine schematische Darstellung zweier miteinander verknüpfter Geschäftsobjekte 1, 1' anhand eines Instanzmodells dar. Beide Geschäftsobjekte 1, 1' sind vom gleichen Objekttyp. Sie unterscheiden sich also ausschließlich durch die an sie gebundenen Funktionseinheiten 2. An dem ersten Geschäftsobjekt 1 sind die Funktionseinheiten "1" bis "n" aggregiert und an dem zweiten Geschäftsobjekt 1' sind die Funktionseinheiten "A" bis "X" aggregiert. Die Funktionseinheit "n" des ersten Geschäftsobjektes 1 stellt die Beziehung zwischen den beiden Geschäftsobjekten 1, 1' als Relation 4 her und verwaltet diese Beziehung.

Einen Ausschnitt einer Entwicklung einer Software oder Softwarekomponente mit einem Entwicklungssystem, wie es in einer Softwareentwicklungsumgebung eingesetzt wird, zeigt beispielhaft FIG 3.

Bei dem Entwicklungssystem handelt es sich um einen Rechner, auf dem eine Softwareengineering-Software ausgeführt wird, welche die erfindungsgemäßen Merkmale in Software abbildet. Mit anderen Worten ist die Erfindung als Teil dieser Softwareengineering-Software implementiert.

Zur Erzeugung bzw. Verwaltung zweier Geschäftsobjekte "Einbaugehäuse" 1 und "Energieversorgungsmodul" 1' wird ein Fabrikobjekt ("factory") 5 genutzt. Das Fabrikobjekt 5 benötigt ein bestimmtes Wissen, um Geschäftsobjekte erzeugen zu können beziehungsweise um die verschiedenen Beziehungen zwischen den Geschäftsobjekten 1, 1' zu kennen. Dieses Wissen ist als Metawissen 6 in einer Beschreibungsdatei 7 abgelegt. Mit anderen Worten wird im Metawissen 6 der Aufbau der Geschäftsobjekte 1, 1' beschrieben. Das Metawissen 6 ist in der Beschreibungsdatei 7 im XML-Format abgelegt, so dass es auf einfache Art und Weise auch automatisiert geändert werden kann.

Das Fabrikobjekt 5 dient als ein Programmrahmen, der die Interpretation des Metawissens 6 vornimmt. Dem Fabrikobjekt 5 ist daher bei Kenntnis des Metawissens 6 unter anderem bekannt, welche Funktionseinheiten 2 standardmäßig welchen Geschäftsobjekten 1 in welcher Form zugeordnet sind.

Das Fabrikobjekt 5 erhält von der Softwareengineering-Software den Auftrag, ein Geschäftsobjekt "Einbaugehäuse" 1 zu erzeugen (Pfeil A). Daraufhin ermittelt das Fabrikobjekt 5 aus dem in der Beschreibungsdatei 7 bereitgestellten Metawissen 6 die zu erzeugenden Funktionseinheiten für das Geschäftsobjekt "Einbaugehäuse" 1 und erzeugt das Geschäftsobjekt "Einbaugehäuse" 1 mit diesen Funktionseinheiten. Bei den Funktionseinheiten handelt es sich um die Funktionseinheit "Steckplätze" 2a und die Funktionseinheit "Bus" 2b.

In einem weiteren Schritt erhält das Fabrikobjekt 5 von der Softwareengineering-Software den Auftrag, das Geschäftsobjekt "Energieversorgungsmodul" 1' zu erzeugen (Pfeil B). Das Fabrikobjekt 5 ermittelt aus dem Metawissen 6 die zu erzeugenden Funktionseinheiten, nämlich in diesem Fall die Funktionseinheiten "Energieversorgung" 2c sowie "Busanschluss" 2d, und erzeugt das Geschäftsobjekt "Energieversorgungsmodul" 1' mit diesen Funktionseinheiten.

Aufträge an die Geschäftsobjekte 1 werden an die Funktionseinheiten 2 verteilt und durchgeführt. So erhält in einem weiteren Schritt beispielsweise das Geschäftsobjekt 1' "Einbaugehäuse" von der Softwareengineering-Software den Auftrag (Pfeil C), das Geschäftsobjekt "Energieversorgungsmodul" 1' mit dem Geschäftsobjekt "Einbaugehäuse" 1 über eine Relation 4 zu verknüpfen. Dieser Auftrag wird an die Funktionseinheit "Steckplätze" 2a des Geschäftsobjektes "Einbaugehäuse" 1 weitergeleitet. Die Funktionseinheit "Steckplätze" 2a baut daraufhin die Beziehung 4 zum Geschäftsobjekt "Energieversorgungsmodul" 1' auf.

Zusammengefasst wird somit vorgeschlagen, insbesondere um auf einfache Art und Weise funktionale Erweiterungen von Geschäftsobjekten zu ermöglichen, dass während des Erzeugens oder im Anschluss an das Erzeugen eines Geschäftobjekts 1 unter Verwendung von Metawissen 6 ein Zuordnen einer oder mehrerer Funktionseinheiten 2 zu dem Geschäftsobjekt 1 erfolgt. Eine Zuordnung einer Funktionseinheit 2 zu einem Geschäftsobjekt 1 kann daher auch während der Laufzeit der Software erfolgen. Es wird somit eine Designvorlage für eine Softwarearchitektur geschaffen, die es ermöglicht, Software-Probleme auf besonders einfache und elegante Art und Weise zu lösen.

## Patentansprüche

1. Verfahren zur Entwicklung einer Software oder einer Softwarekomponente, **gekennzeichnet durch** ein Erzeugen eines Geschäftsobjektes (1), wobei während des Erzeugens oder im Anschluss an das Erzeugen unter Verwendung von Metawissen (6) ein Zuordnen einer oder mehrerer Funktionseinheiten (2) zu dem Geschäftsobjekt (1) erfolgt.

2. Verfahren nach Anspruch 1, **dadurch gekennzeichnet, dass** die Funktionseinheiten (2) jeweils voneinander unabhängige Funktionen der Geschäftslogik realisieren.

3. Verfahren nach Anspruch 1 oder 2, **gekennzeichnet durch** ein Erzeugen eines zweiten Geschäftsobjektes (1'), wobei eine Beziehung zwischen dem ersten Geschäftsobjekt (1) und dem zweiten Geschäftsobjekt (1') von einer Funktionseinheit (2) definiert wird.

4. System zur Entwicklung einer Software oder einer Softwarekomponente, **gekennzeichnet durch** Mittel zum Erzeugen eines Geschäftsobjektes (1) und Mittel zum Zuordnen einer oder mehrerer Funktionseinheiten (2) zu dem Geschäftsobjekt (1) unter Verwendung von Metawissen (6) während des Erzeugens oder im Anschluss an das Erzeugen.

5. Verfahren zur Ausführung einer Software auf einem Rechner, wobei die Software mit Hilfe eines Systems nach Anspruch 4 oder nach einem Verfahren nach einem der Ansprüche 1 bis 3 entwickelt ist oder eine mit Hilfe des Systems nach Anspruch 4 oder nach dem Verfahren nach einem der Ansprüche 1 bis 3 entwickelte Softwarekomponente aufweist, **dadurch gekennzeichnet, dass** eine Zuordnung einer Funktionseinheit (2) zu einem Geschäftsobjekt (1) während der Laufzeit der Software erfolgt.

6. Verfahren nach Anspruch 5, **dadurch gekennzeichnet, dass** während der Laufzeit eine Änderung, insbesondere eine Erweiterung, des Metawissens (6) erfolgt.

7. Verfahren nach Anspruch 5 oder 6, **dadurch gekennzeichnet, dass** die Beziehung (4) zwischen einem ersten Geschäftsobjekt (1) und einem zweiten Geschäftsobjekt (1') von einer Funktionseinheit (2) dynamisch verwaltet, insbesondere hergestellt, wird.
